# EUROPEAN PATENT SPECIFICATION

(11) **EP 4 438 484 B1**
(45) Date of publication and mention of the grant of the patent: **04.03.2026**
(21) Application number: 23166120.8
(22) Date of filing: 31.03.2023
(51) Int. Cl.: B64D 27/16, F02C 6/00, B64D 41/00

(54) **VEHICLE PROPULSION SYSTEM COMPRISING A FUEL CELL**
FAHRZEUGANTRIEBSSYSTEM MIT BRENNSTOFFZELLE
SYSTÈME DE PROPULSION DE VÉHICULE COMPRENANT UNE PILE À COMBUSTIBLE

(43) Date of publication of application: 02.10.2024
(73) Proprietor: Airbus Operations GmbH, 21129 Hamburg (DE)
(72) Inventor: Schlipf, Bernhard, 21129 Hamburg (DE); Daandels, Dort, 21129 Hamburg (DE)

(56) References cited:
- EP-B1- 1 643 575
- US-A1- 2008 001 038
- US-A1- 2014 023 945
- US-A1- 2022 356 847

## Description

The present disclosure generally relates to a vehicle propulsion system having a turbine driven by exhaust gas of a fuel cell, and a vehicle having such propulsion system. Particularly, the present disclosure relates to a vehicle propulsion system and a corresponding vehicle, each having a turbine driving a propulsion device and a fuel cell, an exhaust of which is fluidly connected to the turbine.

Currently propulsion systems for vehicles, particularly aircrafts, are under development that operate on renewable energy sources. Specific research focuses on employing hydrogen as a renewable energy source. While it is possible to operate a turbo engine on a gaseous fuel, such as methane made from hydrogen or even hydrogen alone, a fuel cell can also be operated with both gases to supply electric power to an electric propulsion system. Aircraft propulsion systems including a fuel cell are disclosed in US 2008/001038 A1, US 2022/356847 A1, and US 2014/023945 A1.

However, to operate a turbo engine on a gaseous fuel, the gas has to be distributed to (usually) multiple turbo engines. In case of hydrogen, this means a duct network for liquid hydrogen over large distances in the vehicle. The operation of a fuel cell together with an electric propulsion system has the drawback of a large cooling requirement for the powerful fuel cell. Such cooling requires air intake(s) and outlet(s) at an exterior surface of the vehicle, which leads to increased drag and, hence, increased fuel consumption.

It is therefore an object of the present disclosure to provide an improved and efficient vehicle propulsion system and corresponding vehicle.

This object is solved by the present invention as defined in the independent claim.

Preferred embodiments are defined by the dependent claims.

According to a first aspect to better understand the present disclosure, a vehicle propulsion system comprises a propulsion device and a turbine mechanically coupled to the propulsion device and configured to drive the propulsion device. Thus, the propulsion for the vehicle is generated by converting energy of a stream of fluid, for example, a gas and/or liquid stream, into a rotation by driving the turbine with the stream of fluid.

The vehicle propulsion system further comprises a fuel cell having an exhaust outlet, and an exhaust duct connecting the exhaust outlet of the fuel cell with the turbine, wherein the turbine is driven by exhaust gas of the fuel cell conducted through the exhaust duct. For instance, a fuel cell usually operates at a particular temperature and generates heat during the electrochemical reaction, which usually means an increase of temperature of a substance or compound fed to the fuel cell.

As a mere example, ambient air may have a temperature below the operating temperature of the fuel cell. Likewise, fuel for the fuel cell (e.g., hydrogen or methane) is stored under pressure and/or in liquid form at a very low temperature, so that its temperature will increase in the fuel cell. This increase in temperature usually comes with an increase of pressure (compared to the ambient pressure of the vehicle propulsion system), which can be employed to drive the turbine.

The electric power generated by the fuel cell can be used for any purpose. As a mere example, the electric power from the fuel cell can be supplied to electric and/or electronic components in a vehicle having such a vehicle propulsion system. On the other hand, the electric power can also be employed to drive a component of the propulsion system, for example, if the available electric power exceeds the usual demand of electric power of the components outside of the vehicle propulsion system. It is to be understood that the fuel cell may be designed to supply electric power only to electric components of the vehicle propulsion system.

In addition, the heat generated by the fuel cell, particularly due to the reaction in the fuel cell, is not wasted as in conventional systems, which have a usual cooling circuit transporting the heat energy to the ambient environment of the system. Specifically, the heat energy from the fuel cell of the present disclosure is used to drive the propulsion device via the turbine. Therefore, an efficient propulsion system can be provided, which uses more energy available from the fuel than conventional systems.

Furthermore, the exhaust duct has to carry a hot fluid (gas and/or liquid), which can be handled easier than liquid hydrogen. Specifically, transporting liquid hydrogen over longer passages, for example from a caudal area of the vehicle to the propulsion device, which in case of an aircraft can be as far as the wings, may include losses or heavy insulated pipes, etc.. The propulsion system of the present disclosure allows short transport paths of the fuel (e.g., liquid hydrogen or methane), since the fuel cell can be installed in the vehicle at any desired location, even away from the propulsion device. An exhaust duct carrying a hot fluid to the propulsion device is much easier to install and handle.

The propulsion device can be a drive axle or a propeller directly driving the vehicle.

Alternatively, the vehicle may be an aircraft equipped with turbo engines. In this case, the propulsion device can be a fan or compressor blade of the turbo engine that is driven by the turbine.

In an implementation variant, the fuel cell can be a high-temperature fuel cell, such as a solid oxide fuel cell (SOFC). This type of fuel cell can operate between 600°C and 1100°C, for example, between 900°C and 1100°C. Such high increase of temperature (compared with ambient air and stored fuel) provides a large thermal energy that can be used to perform thermodynamic work, such as generating mechanical energy in the turbine.

Alternatively, the fuel cell can be a low-temperature fuel cell, for example, operating at a maximum temperature of 120 °C. For instance, such fuel cells operate between 70°C and 120°C. Even this type of fuel cell usually comes with an increase of temperature of the reacting gases and/or liquids, so that thermal energy is available for the propulsion device.

The vehicle propulsion system further comprises an air conveying device electrically connected to the fuel cell, and configured to convey air to the fuel cell through an inlet duct. The air is a source of oxygen for the reaction in the fuel cell. By driving the conveying device, the amount of air and, hence, oxidiser fed to the fuel cell can be controlled.

The fuel cell is configured to supply electric power to the conveying device.

Thus, the electric power generated in the fuel cell can be used to supply one of the reactants to the fuel cell, so that no additional power supply has to be provided. In examples not falling within the scope of the claims, the air conveyed by the conveying devices can be received from any location, and it is not necessary to provide a ram air inlet, as such ram air inlet would increase drag. This allows increasing the efficiency of the overall vehicle propulsion system.

The conveying devices can be a pump or compressor configured to convey a gas, particularly air.

In yet another implementation variant, the vehicle propulsion system can further comprise a vaporiser configured to vaporise a liquid fuel for the fuel cell. Such vaporiser is particularly valuable if the fuel is stored in liquid form, such as cooled liquid hydrogen. The vaporiser can be configured to change the state of the fuel, such as from a liquid state to a gaseous state.

In addition, the vehicle propulsion system can comprise a heat exchanger configured to heat the liquid fuel in the vaporiser, i.e., the vaporiser can increase a temperature of the fuel.

As a mere example, the inlet duct can be fluidly connected to the heat exchanger to thermally couple the conveyed air in the inlet duct with the liquid fuel in the vaporiser. Since the conveying device increases the energy in the conveyed air, which may result in an increased temperature of the air, this thermal energy in the air can be used to transfer the fuel into the gaseous state and/or increases the temperature of the fuel. The heat exchanger, hence, thermally couples the conveyed air with the fuel, but fluidly separates the conveyed air from the fuel.

This further increases efficiency of the vehicle propulsion system, since the conversion of the state of the fuel (e.g., liquid to gaseous) can be achieved from thermal energy available in the propulsion system. The conveying devices is electrically driven by the fuel cell, the conversion of the state of the fuel can be performed without any additional energy source.

In a further implementation variant, the vehicle propulsion system can further comprise an inlet duct branch branching off the inlet duct. The inlet duct branch is fluidly connected to the heat exchanger to thermally couple a portion of the conveyed air branched-off from the inlet duct with the liquid fuel in the vaporiser. In other words, the inlet duct branch is designed (sized and dimensioned) to conduct only a portion of the air conveyed by the conveying devices, while the remaining portion of the air is conducted by the inlet duct directly to the fuel cell.

Furthermore, the inlet duct branch can conduct the air downstream of the heat exchanger into the fuel cell. Alternatively or additionally, the inlet duct branch can conduct the air downstream of the heat exchanger into the (regular) inlet duct, so that both air streams are mixed before entering the fuel cell.

In an implementation variant, the vehicle propulsion system can further comprise a vaporiser configured to vaporise a liquid fuel for the fuel cell, and a heat exchanger configured to heat the liquid fuel in the vaporiser. Furthermore, the exhaust duct is fluidly connected to the heat exchanger to thermally couple the exhaust gas in the exhaust duct with the liquid fuel in the vaporiser. In other words, thermal energy of the exhaust gas downstream of the fuel cell is used to change the state of the fuel (e.g., liquid to gaseous) and/or increase the temperature of the fuel before entering the fuel cell. This increases efficiency of the overall vehicle propulsion system, as the vaporiser can be operated without additional energy source.

In another implementation variant, the vehicle propulsion system comprises an exhaust duct branch branching of the exhaust duct, wherein the exhaust duct branch is fluidly connected to the heat exchanger to thermally couple a portion of the exhaust gas branched-off the exhaust duct with the liquid fuel in the vaporiser.

It is to be understood that the vehicle propulsion system can comprise only the heat exchanger thermally coupling the fuel with the conveyed air in the inlet duct (or the inlet duct branch), only the heat exchanger thermally coupling the fuel with the exhaust gas in the exhaust duct (or the exhaust duct branch), or a plurality of heat exchangers thermally coupling the fuel with the conveyed air and/or the exhaust gas.

In yet another implementation variant, the vehicle propulsion system can further comprise an exhaust conveying device configured to convey at least a portion of the exhaust gas from the fuel cell through the exhaust duct branch. The exhaust conveying device can be a pump or compressor configured to convey a gas, particularly the exhaust gas.

The exhaust conveying device allows supplementing energy to the exhaust gas conveyed through the exhaust duct branch, which is further used to operate the vaporiser.

As a mere example, the exhaust conveying device can be electrically connected to the fuel cell, and the fuel cell is further configured to supply electric power to the exhaust conveying device. Thus, the vehicle propulsion system can be operated in a very efficient manner, since the energy for conveying the exhaust gas through the exhaust duct branch is provided by the fuel cell itself.

Furthermore, the exhaust duct branch may enter the (regular) exhaust duct downstream of the heat exchanger. In other words, the exhaust gas conveyed through the exhaust duct branch can be mixed with the (regular) exhaust gas in the (regular) exhaust duct after being thermally coupled with the fuel in the heat exchanger.

In a further implementation variant, the vehicle propulsion system can further comprise a vaporiser configured to vaporise a liquid fuel for the fuel cell, and a combustor fluidly connected to the exhaust duct upstream of the turbine and fluidly connected to the vaporiser. In other words, the combustor receives the exhaust gas from the fuel cell, i.e., via the exhaust duct as well as fuel from the vaporiser.

Thus, the combustor can be configured to supply vaporised fuel from the vaporiser into the exhaust gas from the exhaust duct and burn the vaporised fuel. This allows a further increase of energy in the exhaust gas. Then the turbine can be driven by a reaction gas of the burned fuel and exhaust gas. As a mere example, the exhaust gas will usually contain a certain amount of oxidiser (e.g., oxygen from the conveyed air), which can be used to burn the vaporised fuel in the combustor. This additional energy from the combustion of the vaporised fuel can be employed to drive the turbine.

For instance, the combustor may only be employed if additional energy for the propulsion device is required, so that the vaporiser fuel burnt in the combustor can be used as a boost function for the propulsion device.

In another implementation variant, the combustor can be integrated into an inlet port of the turbine. Likewise, the combustor can be integrated into the turbine. In both cases, a compact propulsion system can be provided.

Alternatively or additionally, the combustor can be integrated into the exhaust outlet of the fuel cell. Likewise, the combustor can be integrated into the fuel cell. Thus, a compact propulsion system can be provided.

Further alternatively or additionally, the combustor can divide the exhaust duct between the fuel cell and the turbine. In other words, the combustor can be installed in the exhaust duct anywhere between the fuel cell and the turbine. Thus, the location of the combustor can be optimised, for example, in view of a duct or line of fuel from the vaporiser to the combustor and/or in view of the exhaust duct location between the fuel cell and the turbine and/or in view of the location of the turbine in the vehicle.

In yet another implementation variant, the vehicle propulsion system can further comprise at least one additional propulsion device, and at least one additional turbine. Each additional turbine is mechanically coupled to one of the at least one additional propulsion device and configured to drive the at least one additional propulsion device. In other words, there are several pairs of a turbine and a propulsion device, wherein each propulsion device is driven by its own turbine.

Furthermore, the exhaust duct can additionally connect the exhaust outlet of the fuel cell with each of the at least one additional turbine, wherein each additional turbine is driven by the exhaust gas of the fuel cell conducted through the exhaust duct.

Thus, a network of exhaust ducts can be installed downstream of the fuel cell and/or downstream of the combustor. Such network of exhaust ducts can be arranged in a vehicle in a much simpler fashion than ducts for a fuel, such as a liquid hydrogen.

Furthermore, a plurality of combustors can be provided in the vehicle propulsion system. Specifically, one combustor for each turbine can be installed.

Alternatively, a common turbine is mechanically coupled to all propulsion devices. Thus, the common turbine can be located in the vehicle at an optimised position, and the exhaust duct does not need to form a duct network. Such common turbine further requires only a single combustor, if implemented.

The vehicle propulsion system further comprises an air inlet fluidly connected to the air conveying device. The air inlet is configured to provide air to the air conveying device. The inlet is arranged at an exterior surface of the vehicle, so that ambient air can be received through the air inlet.

The air inlet can be implemented in form of a ram air inlet. Thus, air pressurised due to the driving velocity of the vehicle can be received at the air inlet.

Alternatively or additionally, the air inlet can be a boundary layer ingestion inlet. Such boundary layer ingestion inlet may receive ambient air from a boundary layer streaming over or accumulating at an exterior surface of the vehicle. The boundary layer ingestion inlet may create less or no drag compared to a ram air inlet. As a mere example, if the vehicle is an aircraft, such boundary layer ingestion (BLI) can be implemented as an inlet at a tail of the aircraft. Alternatively, the BLI inlet can be arranged at a wing, for example, at a flap of the aircraft. The BLI inlet can be arranged at a leading edge of the flap and/or a trailing edge of the fixed wing box in front of the leading-edge of the flap.

According to a second aspect to better understand the present disclosure, an aircraft comprises a vehicle propulsion system according to the first aspect or one of its variants, options and alternatives.

The present disclosure is not restricted to the aspects and variants in the described form and order. Specifically, the description of aspects and variants is not to be understood as a specific limiting grouping of features. It is to be understood that the present disclosure also covers combinations of the aspects and variants.

In the following, the present disclosure will further be described with reference to exemplary implementations illustrated in the figures, in which:
- Figure 1: schematically illustrates an exemplary vehicle propulsion system;
- Figures 2 to 4: schematically illustrate further exemplary vehicle propulsion systems; and
- Figures 5 and 6: schematically illustrate exemplary vehicle propulsion systems including a combustor.

In the following description, for purposes of explanation and not limitation, specific details are set forth in order to provide a thorough understanding of the present disclosure. It will be apparent to one skilled in the art that the present disclosure may be practiced in other implementations that depart from these specific details.

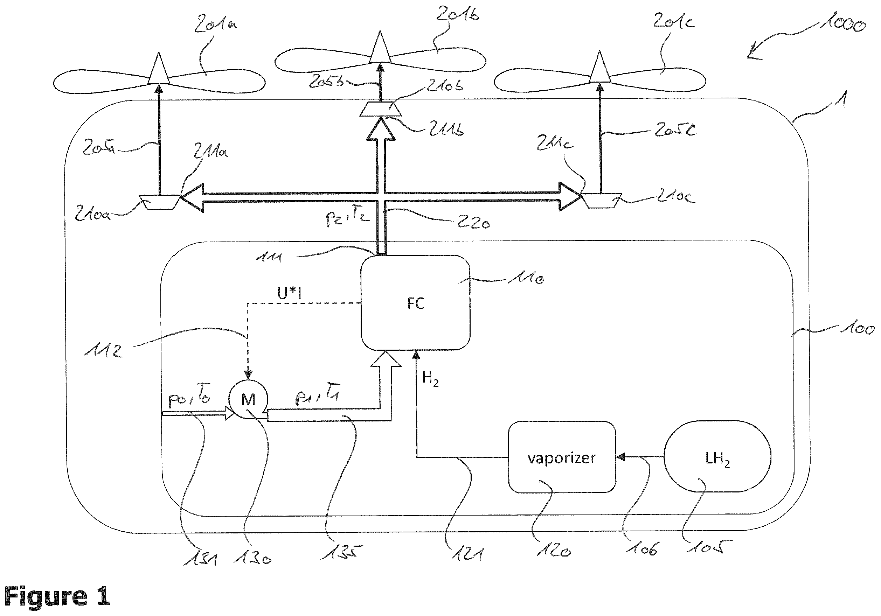

Figure 1 schematically illustrates an exemplary vehicle propulsion system 1000. Such vehicle propulsion system can be installed in a vehicle 1, such as an aircraft, a bus, a train, a ship, a truck, a car, a motorbike or the like.

The vehicle propulsion system 1000 comprises a propulsion device 201. Although the propulsion device 201 is illustrated as a propeller, it is to be understood that it can be a wheel or a drive axle. Furthermore, Figure 1 illustrates three propulsion devices 201a,b,c, which are for illustrative purposes only. It is to be understood that any number of propulsion devices 201 can be installed.

The vehicle propulsion system 1000 further comprises a turbine 210 mechanically coupled to the propulsion device 201 and configured to drive the propulsion device 201. For example, a shaft 205 may be provided that connects the turbine 210 with the propulsion device 201. Such shaft 205 may rotate from a rotational movement of the turbine 210 and rotates the propulsion device 201. While the shaft 205 may be fixedly coupled to the turbine 210 as well as the propulsion device 201, one or more gears or gearboxes (not illustrated) may be provided between the turbine 210 and the propulsion device 201.

The vehicle propulsion system 1000 further comprises a fuel cell system 100. Particularly, the vehicle propulsion system 1000 comprises a fuel cell 110 having an exhaust outlet 111, where product fluid (gas or liquid) leaves the fuel cell 110. An exhaust duct 220 connect the exhaust outlet 111 of the fuel cell 110 with the turbine 210. The exhaust duct 220 allows conducting the product fluid, such as an exhaust gas, from the fuel cell 110 to the turbine 210. Thus, the turbine 210 can be driven by the exhaust gas of the fuel cell 110 conducted through the exhaust duct 220.

The fuel cell system 100 can further include a storage tank 105 for the fuel (also referred to as a fuel tank 105). Figure 1 illustrates a liquid hydrogen tank, although any kind of fuel can be stored. The fuel is conducted to the fuel cell 110 via a fuel line 106 fluidly connected to the fuel tank 105.

In case the fuel is stored in liquid form, while the fuel cell 110 requires gaseous fuel, a vaporiser 120 can be provided in the fuel cell system 100. For example, the vaporiser may be fluidly connected to the fuel line 106, while a vaporised fuel line 121 fluidly connects the vaporiser 120 with the fuel cell 110. As a mere example, the vaporiser 120 can increase a temperature of the fuel and/or can decrease a pressure of the fuel.

The oxidiser for the fuel cell 110 can be provided in form of air. Figure 1 illustrates an air conveying device 130 configured to convey air to the fuel cell through an inlet duct 135. The inlet duct 135, hence, fluidly connects the conveying devices 130 with an inlet of the fuel cell 110.

Furthermore, the fuel cell 110 is configured to supply electric power (U*I) to the conveying device 130, for example, in form of an electric connection 112 between the air conveying device 130 and the fuel cell 110.

The air is received from an air inlet 131 fluidly connected to the air conveying device 130. Such air inlet 131 is a ram air inlet or a boundary layer ingestion inlet. The air inlet 131 can be provided at an outer skin of the aircraft 1, for example, at a fuselage of the aircraft 1, or can be provided at an outer surface of a hidden portion of a wing or other surface of the vehicle 1. Thus, ambient air (from an environment outside of the vehicle 1) can be conveyed by the conveying device 130 into the fuel cell 110.

As a mere example, the ambient air in/from the air inlet 131 can have a basic pressure p₀ and a basic temperature T₀. This basic pressure and temperature p₀, T₀ can be normal pressure (depending on an altitude of the vehicle 1) and an ambient air temperature, for example, between -60°C and +70°C.

The conveying device 130 can be configured to increase the pressure of the conveyed air to a first pressure p₁, which usually comes with an increase of the temperature of the conveyed air to a first temperature T₁. The conveying device 130 can be controlled in such a manner that the fuel cell 110 is provided with a sufficient amount of oxidiser (conveyed air) and/or with air of a particular pressure and temperature p₁, T₁.

When leaving the fuel cell 110, the exhaust gas in the exhaust duct 220 includes waste heat, i.e. reaction heat, of the fuel cell 110. Thus, the exhaust gas has a second temperature T₂, which can be higher than the first temperature T₁, and due to the increased temperature, the exhaust gas may also have a second pressure p₂, which is higher than the first pressure p₁. The energy of the exhaust gas due to the second pressure and temperature p₂, T₂ can be employed to drive one or more of the turbines 210a,b,c.

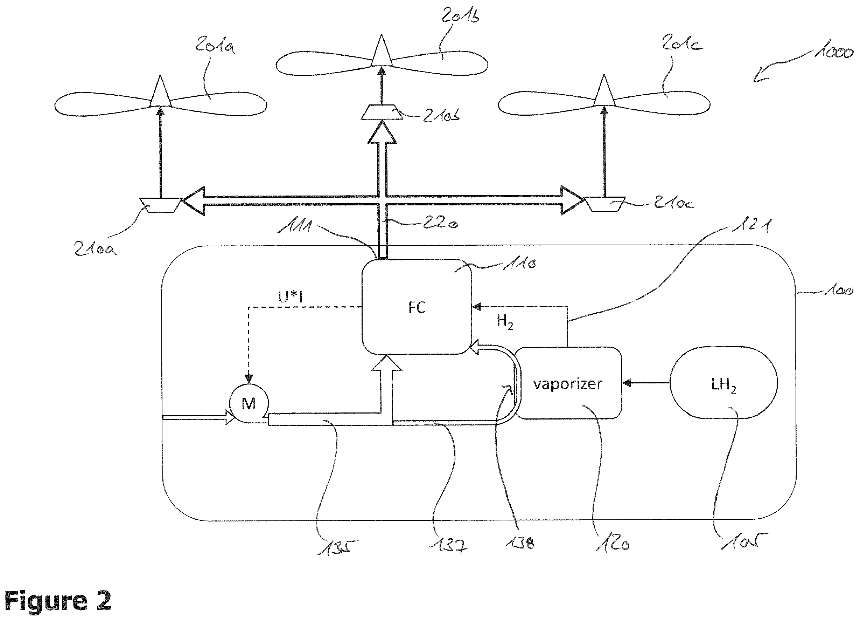

Figure 2 schematically illustrates a further exemplary vehicle propulsion system 1000, wherein a plurality of components are the same as those illustrated and described with respect to Figure 1. Thus, these like components have been supplemented with the same reference numerals, and the description of these components is omitted to avoid redundancies. Some of the reference numerals of these like components have been omitted, in order to increase clarity of the drawing.

In comparison to the exemplary vehicle propulsion system 1000 of Figure 1, the system 1000 of Figure 2 comprises an inlet duct branch 137 branching off the inlet duct 135. Thus, the inlet duct branch 137 is fluidly connected to the inlet duct 135 and is configured to conduct at least a portion of the conveyed air from the inlet duct 135.

The vehicle propulsion system 1000 further comprises a heat exchanger 138 configured to heat the liquid fuel in the vaporiser 120. Furthermore, the inlet duct branch 137 is fluidly connected to the heat exchanger 138. Thus, the heat exchanger 138 thermally couples a portion of the conveyed air branched-off the inlet duct 135 with the liquid fuel in the vaporiser 120. It is to be understood that the conveyed air in the inlet duct branch 137 is fluidly separated from the fuel in the vaporiser 120, in order to avoid a reaction between both fluids.

The inlet duct branch 137 may then (after streaming through the heat exchanger 138) be fed to the fuel cell 110 (as illustrated) or can be fed back into the inlet duct 135.

It is to be understood that instead of the inlet duct branch 137, the inlet duct 135 may be fluidly connected to the heat exchanger 138 (not illustrated), so that the entire conveyed air in the inlet duct 135 is thermally coupled with the fuel in the vaporiser 120.

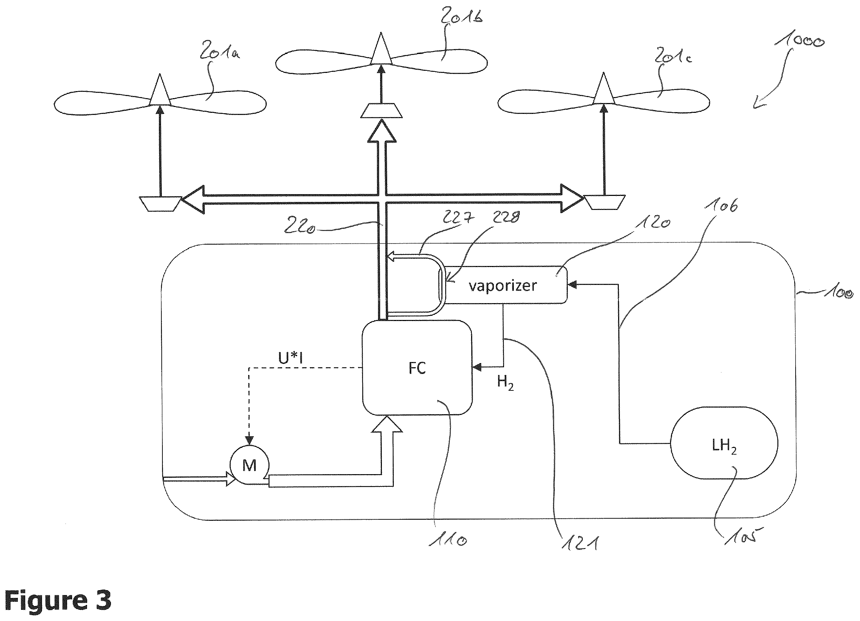

Figure 3 schematically illustrates a further exemplary vehicle propulsion system 1000, wherein a plurality of components are the same as those illustrated and described with respect to Figures 1 and 2. Thus, these like components have been supplemented with the same reference numerals, and the description of these components is omitted to avoid redundancies. Some of the reference numerals of these like components have been omitted, in order to increase clarity of the drawing.

In comparison to the exemplary vehicle propulsion system 1000 of Figure 1, the system 1000 of Figure 3 comprises an exhaust duct branch 227 branching off the exhaust duct 220. Thus, the exhaust duct branch 227 is fluidly connected to the exhaust duct 220 and is configured to conduct at least a portion of the exhaust gas from the exhaust duct 220.

The vehicle propulsion system 1000 further comprises a heat exchanger 228 configured to heat the liquid fuel in the vaporiser 120. Furthermore, the exhaust duct branch is fluidly connected to the heat exchanger 228. Thus, the heat exchanger 228 thermally couples a portion of the exhaust gas branched-off the exhaust duct 220 with the liquid fuel in the vaporiser 120. It is to be understood that the exhaust gas in the exhaust duct branch 227 is fluidly separated from the fuel in the vaporiser 120, in order to avoid a reaction between both fluids. The exhaust duct branch 227 may then (after streaming through the heat exchanger 228) be fed back to the exhaust duct 220 (as illustrated).

It is to be understood that instead of the exhaust duct branch 227, the exhaust duct 220 may be fluidly connected to the heat exchanger 228 (not illustrated), so that the entire exhaust gas in the exhaust duct 220 is thermally coupled with the fuel in the vaporiser 120.

Furthermore, a combination of the exemplary vehicle propulsion systems 1000 of Figures 2 and 3 can also be implemented (not illustrated). Thus, the vaporiser 120 can be thermally coupled with the conveyed air and the exhaust gas (e.g., via two heat exchangers 138, 228).

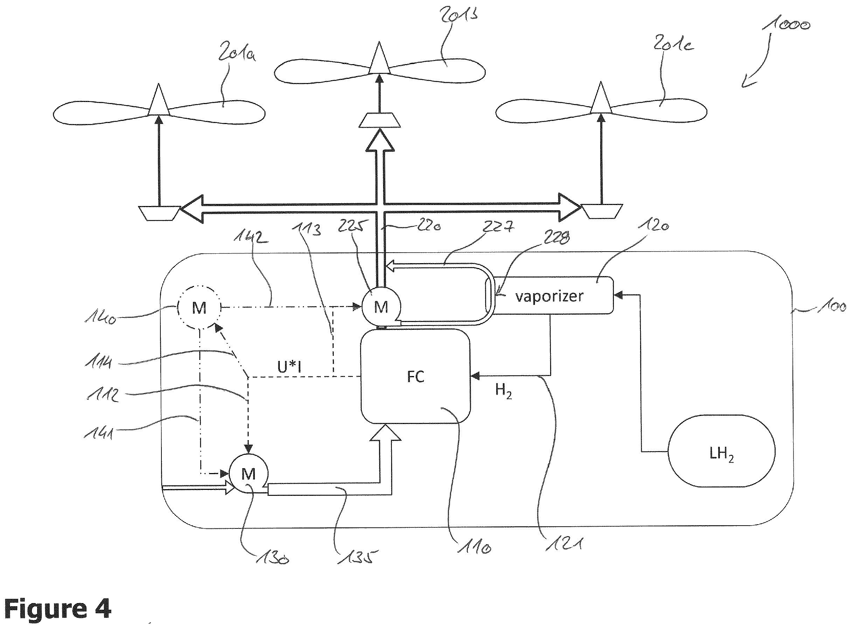

Figure 4 schematically illustrates a further exemplary vehicle propulsion system 1000, wherein a plurality of components are the same as those illustrated and described with respect to Figure 3. Thus, these like components have been supplemented with the same reference numerals, and the description of these components is omitted to avoid redundancies. Some of the reference numerals of these like components have been omitted, in order to increase clarity of the drawing.

In comparison to the exemplary vehicle propulsion system 1000 of Figure 3, the system 1000 of Figure 4 comprises an exhaust conveying device 225 configured to convey at least a portion of the exhaust gas from the fuel cell 110 through the exhaust duct branch 227. Thus, the pressure and/or temperature of the exhaust gas in the exhaust duct branch 227 may be increased compared to the exhaust gas leaving the fuel cell 110. This allows operating the vaporiser 120 more efficiently.

Furthermore, the exhaust gas leaving the heat exchanger 228 and being mixed (back) to the exhaust gas in the exhaust duct 220 may have a similar pressure and/or temperature of the exhaust gas in the exhaust duct 220. Thus, it is avoided that exhaust gas in the exhaust duct 220 acts against the stream of exhaust gas leaving the heat exchanger 228.

Furthermore, the exhaust conveying device 225 can be electrically connected to the fuel cell 110. Thus, the fuel cell 110 can be further configured to supply electric power to the exhaust conveying device 225 via a power line 113.

Figure 4 additionally illustrates further implementation variants that can be employed in any of the exemplary vehicle propulsion systems 1000 of Figures 1 to 3. These implementation variants are drawn by double dotted and dashed lines.

Specifically, the air conveying device 130 and/or the exhaust conveying device 225 may not include their own power unit, such as an electric drive or motor. Instead, a separate motor 140 may be provided that is mechanically connected to the respective conveying device 130, 225. As a mere example, the motor 140 can be provided with a shaft 141 driving the air conveying device 130. Alternatively or additionally, the motor 140 can be provided with a shaft 142 driving the exhaust conveying device 225. It is to be understood that the motor 140 can also be provided with a single common shaft (not illustrated), with which both conveying devices 130, 225 are mechanically coupled and driven.

The motor 140 can be electrically connected to the fuel cell 110. Thus, the fuel cell 110 can supply electric power via a power line 114 to a single common motor 140 driving one or both of the air conveying device 130 and the exhaust conveying device 225.

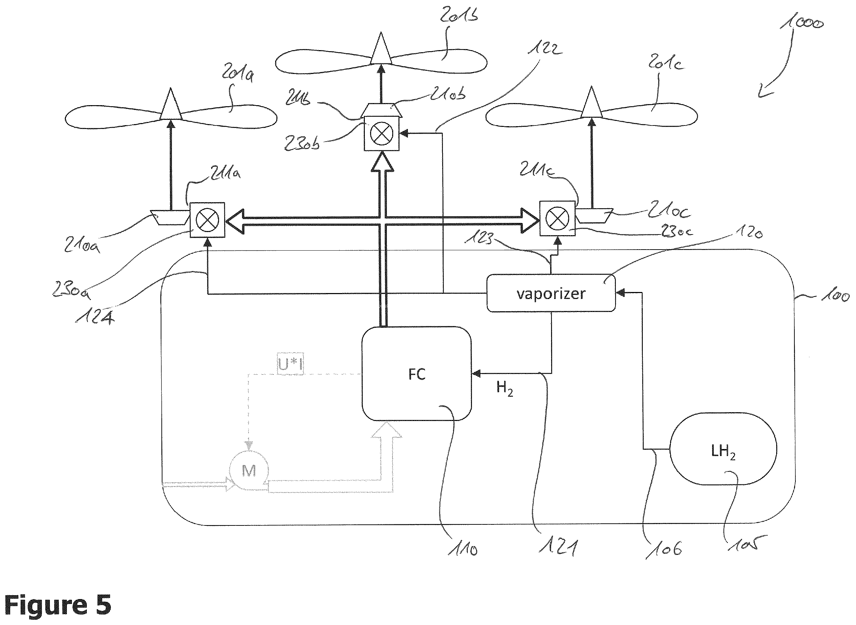

Figure 5 schematically illustrates a further exemplary vehicle propulsion system 1000, wherein a plurality of components are the same as those illustrated and described with respect to Figures 1 to 4. Thus, these like components have been supplemented with the same reference numerals, and the description of these components is omitted to avoid redundancies. Some of the reference numerals of these like components have been omitted, in order to increase clarity of the drawing.

In comparison to the exemplary vehicle propulsion system 1000 of Figure 1, the system 1000 of Figure 5 comprises a combustor 230 fluidly connected to the exhaust duct 220 upstream of the turbine 210. The combustor 230 receives exhaust gas from the exhaust duct 220.

In addition, the combustor can be fluidly connected to the vaporiser 120 via fuel lines 122, 123, 124 and is configured to supply vaporised fuel from the vaporiser 120 into the exhaust gas from the exhaust duct 220 and to burn the vaporised fuel. Thus, the turbine is driven by a reaction gas of the burned fuel and exhaust gas, so that additional energy can be provided to the turbine 210 by the combustor 230.

Figure 5 illustrates a combustor 230 arranged at an inlet port 211 of the turbine 210. It is to be understood that the combustor 230 can likewise be integrated into the inlet port 211 of the turbine 210 or can be integrated into the turbine 210 completely.

Furthermore, each propulsion device 201a,b,c can be equipped with its own turbine 210a,b,c, which is driven by the reaction gas from a respective combustor 230a,b,c.

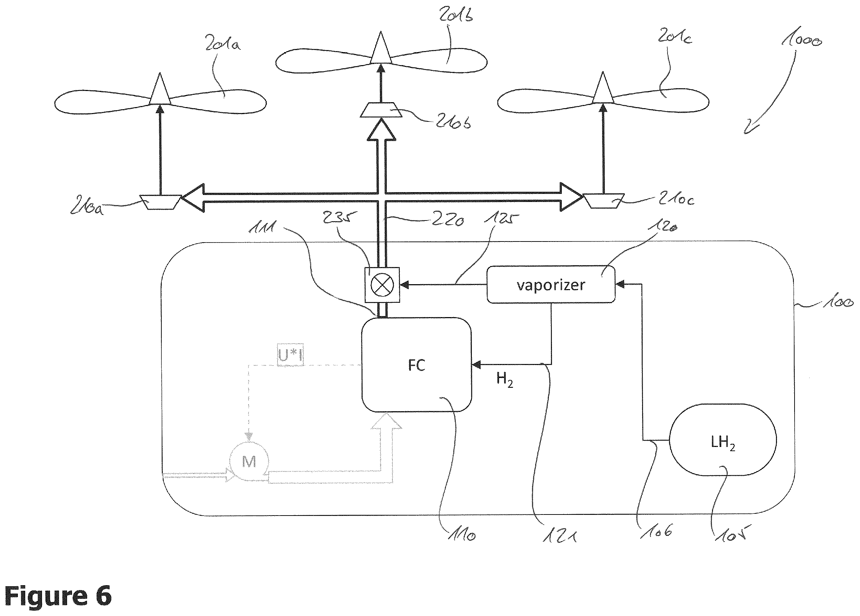

Figure 6 illustrates an exemplary vehicle propulsion system 1000 forming an alternative or addition to the vehicle propulsion system 1000 of Figure 5. Specifically, Figure 6 illustrates a single combustor 235 dividing the exhaust duct 220 between the fuel cell 110 and the turbine 210. This single combustor 235 is likewise fluidly connected to the vaporiser 120 via fuel line 125, to receive vaporised fuel and to burn it in the exhaust gas from the exhaust duct 220. Downstream of the single combustor 235 the exhaust gas has a further increased pressure and/or temperature and, hence, more energy to be provided to the turbine 210.

Instead of dividing the exhaust duct 220, the combustor 235 can be integrated into an exhaust outlet 111 of the fuel cell 110 or can be integrated directly into the fuel cell 110 (both options not illustrated).

## Claims

1. A vehicle propulsion system (1000), comprising:
a propulsion device (201);
a turbine (210) mechanically coupled to the propulsion device (201) and configured to drive the propulsion device (201);
a fuel cell (110) having an exhaust outlet (111); and
an exhaust duct (220) connecting the exhaust outlet (111) of the fuel cell (110) with the turbine (210),
wherein the turbine (210) is driven by exhaust gas of the fuel cell (110) conducted through the exhaust duct (220),
an air conveying device (130) configured to convey air to the fuel cell (110) through an inlet duct (135), and
an air inlet (131) fluidly connected to the air conveying device (130) and configured to provide air to the air conveying device (130),
**characterised in that**
the air conveying device (130) is electrically connected to the fuel cell (110), wherein the fuel cell (110) is configured to supply electric power to the air conveying device (130), and
wherein the air inlet (131) is a ram air inlet or a boundary layer ingestion inlet.

2. The vehicle propulsion system (1000) according to claim 1, further comprising:
a vaporiser (120) configured to vaporise a liquid fuel for the fuel cell (110); and
a heat exchanger (138) configured to heat the liquid fuel in the vaporiser (120),
wherein the inlet duct (135) is fluidly connected to the heat exchanger (138) to thermally couple the conveyed air in the inlet duct (135) with the liquid fuel in the vaporiser (120).

3. The vehicle propulsion system (1000) according to claim 2, further comprising:
an inlet duct branch (137) branching off the inlet duct (135),
wherein the inlet duct branch (137) is fluidly connected to the heat exchanger (138) to thermally couple a portion of the conveyed air branched-off the inlet duct (135) with the liquid fuel in the vaporiser (120).

4. The vehicle propulsion system (1000) according to one of claims 1 to 3, further comprising:
a vaporiser (120) configured to vaporise a liquid fuel for the fuel cell (110); and
a heat exchanger (228) configured to heat the liquid fuel in the vaporiser (120),
wherein the exhaust duct (220) is fluidly connected to the heat exchanger (228) to thermally couple the exhaust gas in the exhaust duct (220) with the liquid fuel in the vaporiser (120).

5. The vehicle propulsion system (1000) according to claim 4, further comprising:
an exhaust duct branch (227) branching of the exhaust duct (220),
wherein the exhaust duct branch (227) is fluidly connected to the heat exchanger (228) to thermally couple a portion of the exhaust gas branched-off the exhaust duct (220) with the liquid fuel in the vaporiser (120).

6. The vehicle propulsion system (1000) according to claim 5, further comprising:
an exhaust conveying device (225) electrically connected to the fuel cell (110), and configured to convey at least a portion of the exhaust gas from the fuel cell (110) through the exhaust duct branch (227),
wherein the fuel cell (110) is further configured to supply electric power to the exhaust conveying device (225).

7. The vehicle propulsion system (1000) according to one of claims 1 to 6, further comprising:
a vaporiser (120) configured to vaporise a liquid fuel for the fuel cell (110); and
a combustor (230, 235) fluidly connected to the exhaust duct (220) upstream of the turbine (210) and fluidly connected to the vaporiser (120),
wherein the combustor (230, 235) is configured to supply vaporised fuel from the vaporiser (120) into the exhaust gas from the exhaust duct (220) and to burn the vaporised fuel, and
wherein the turbine (210) is driven by a reaction gas of the burned fuel and exhaust gas.

8. The vehicle propulsion system (1000), according to claim 7, wherein:
the combustor (230) is integrated into an inlet port (211) of the turbine (210), or
the combustor (235) is integrated into the exhaust outlet (111) of the fuel cell (110), or
the combustor (235) divides the exhaust duct (220) between the fuel cell (110) and the turbine (210).

9. The vehicle propulsion system (1000), according to one of claims 1 to 8, further comprising:
at least one additional propulsion device (201a, 201b); and
at least one additional turbine (210a, 210b),
wherein each additional turbine (210a, 210b) is mechanically coupled to one of the at least one additional propulsion device (201a, 201b) and configured to drive the at least one additional propulsion device (201a, 201b),
wherein the exhaust duct (220) additionally connects the exhaust outlet (111) of the fuel cell (110) with each of the at least one additional turbine (210), and
wherein each additional turbine (210) is driven by the exhaust gas of the fuel cell (110) conducted through the exhaust duct (220).

10. An aircraft (1) comprising a vehicle propulsion system (1000) according to one of claims 1 to 9.

## Patentansprüche

1. Fahrzeugantriebssystem (1000), umfassend:
eine Antriebsvorrichtung (201);
eine Turbine (210), die mechanisch mit der Antriebsvorrichtung (201) gekoppelt und so konfiguriert ist, dass sie die Antriebsvorrichtung (201) antreibt;
eine Brennstoffzelle (110) mit einem Auslass (111); und
eine Abgasleitung (220), die den Auslass (111) der Brennstoffzelle (110) mit der Turbine (210) verbindet,
wobei die Turbine (210) durch Abgas der Brennstoffzelle (110) angetrieben wird, das durch die Abgasleitung (220) geleitet wird,
eine Luftfördervorrichtung (130), die so konfiguriert ist, dass sie Luft durch eine Einlassleitung (135) zur Brennstoffzelle (110) fördert, und
einen Lufteinlass (131), der strömungstechnisch mit der Luftfördervorrichtung (130) verbunden und so konfiguriert ist, dass er der Luftfördervorrichtung (130) Luft bereitstellt,
**dadurch gekennzeichnet, dass**
die Luftfördervorrichtung (130) elektrisch mit der Brennstoffzelle (110) verbunden ist, wobei die Brennstoffzelle (110) so konfiguriert ist, dass sie der Luftfördervorrichtung (130) elektrische Energie zuführt, und
wobei der Lufteinlass (131) ein Staulufteinlass oder ein Grenzschichtabsaugungseinlass ist.

2. Fahrzeugantriebssystem (1000) nach Anspruch 1, ferner umfassend:
einen Verdampfer (120), der so konfiguriert ist, dass er einen flüssigen Brennstoff für die Brennstoffzelle (110) verdampft; und
einen Wärmetauscher (138), der so konfiguriert ist, dass er den flüssigen Brennstoff im Verdampfer (120) erwärmt,
wobei die Einlassleitung (135) strömungstechnisch mit dem Wärmetauscher (138) verbunden ist, um die in der Einlassleitung (135) geförderte Luft thermisch mit dem flüssigen Brennstoff im Verdampfer (120) zu koppeln.

3. Fahrzeugantriebssystem (1000) nach Anspruch 2, ferner umfassend:
eine Einlassleitungsabzweigung (137), die von der Einlassleitung (135) abzweigt,
wobei die Einlassleitungsabzweigung (137) strömungstechnisch mit dem Wärmetauscher (138) verbunden ist, um einen Teil der von der Einlassleitung (135) abgezweigten geförderten Luft thermisch mit dem flüssigen Brennstoff im Verdampfer (120) zu koppeln.

4. Fahrzeugantriebssystem (1000) nach einem der Ansprüche 1 bis 3, ferner umfassend:
einen Verdampfer (120), der so konfiguriert ist, dass er einen flüssigen Brennstoff für die Brennstoffzelle (110) verdampft; und
einen Wärmetauscher (228), der so konfiguriert ist, dass er den flüssigen Brennstoff im Verdampfer (120) erwärmt,
wobei die Abgasleitung (220) strömungstechnisch mit dem Wärmetauscher (228) verbunden ist, um das Abgas in der Abgasleitung (220) thermisch mit dem flüssigen Brennstoff im Verdampfer (120) zu koppeln.

5. Fahrzeugantriebssystem (1000) nach Anspruch 4, ferner umfassend:
eine Abgasleitungsabzweigung (227), die von der Abgasleitung (220) abzweigt,
wobei die Abgasleitungsabzweigung (227) strömungstechnisch mit dem Wärmetauscher (228) verbunden ist, um einen Teil des von der Abgasleitung (220) abgezweigten Abgases thermisch mit dem flüssigen Brennstoff im Verdampfer (120) zu koppeln.

6. Fahrzeugantriebssystem (1000) nach Anspruch 5, ferner umfassend:
eine Abgasfördervorrichtung (225), die elektrisch mit der Brennstoffzelle (110) verbunden und so konfiguriert ist, dass sie mindestens einen Teil des Abgases von der Brennstoffzelle (110) durch die Abgasleitungsabzweigung (227) fördert,
wobei die Brennstoffzelle (110) ferner so konfiguriert ist, dass sie der Abgasfördervorrichtung (225) elektrische Energie zuführt.

7. Fahrzeugantriebssystem (1000) nach einem der Ansprüche 1 bis 6, ferner umfassend:
einen Verdampfer (120), der so konfiguriert ist, dass er einen flüssigen Brennstoff für die Brennstoffzelle (110) verdampft; und
eine Brennkammer (230, 235), die strömungstechnisch mit der Abgasleitung (220) stromaufwärts der Turbine (210) und strömungstechnisch mit dem Verdampfer (120) verbunden ist,
wobei die Brennkammer (230, 235) so konfiguriert ist, dass sie verdampften Brennstoff vom Verdampfer (120) in das Abgas aus der Abgasleitung (220) einspeist und den verdampften Brennstoff verbrennt, und
wobei die Turbine (210) durch ein Reaktionsgas des verbrannten Brennstoffs und des Abgases angetrieben wird.

8. Fahrzeugantriebssystem (1000) nach Anspruch 7, wobei:
die Brennkammer (230) in einen Einlassstutzen (211) der Turbine (210) integriert ist, oder
die Brennkammer (235) in den Auslass (111) der Brennstoffzelle (110) integriert ist, oder
die Brennkammer (235) die Abgasleitung (220) zwischen der Brennstoffzelle (110) und der Turbine (210) unterteilt.

9. Fahrzeugantriebssystem (1000) nach einem der Ansprüche 1 bis 8, ferner umfassend:
mindestens eine zusätzliche Antriebsvorrichtung (201a, 201b); und
mindestens eine zusätzliche Turbine (210a, 210b),
wobei jede zusätzliche Turbine (210a, 210b) mechanisch mit einer der mindestens einen zusätzlichen Antriebsvorrichtung (201a, 201b) gekoppelt und so konfiguriert ist, dass sie die mindestens eine zusätzliche Antriebsvorrichtung (201a, 201b) antreibt,
wobei die Abgasleitung (220) zusätzlich den Auslass (111) der Brennstoffzelle (110) mit jeder der mindestens einen zusätzlichen Turbine (210) verbindet, und
wobei jede zusätzliche Turbine (210) durch das Abgas der Brennstoffzelle (110) angetrieben wird, das durch die Abgasleitung (220) geleitet wird.

10. Luftfahrzeug (1) mit einem Fahrzeugantriebssystem (1000) nach einem der Ansprüche 1 bis 9.

## Revendications

1. Système de propulsion de véhicule (1000), comprenant :
un dispositif de propulsion (201) ;
une turbine (210) couplée mécaniquement au dispositif de propulsion (201) et configurée pour entraîner le dispositif de propulsion (201) ;
une pile à combustible (110) ayant une sortie d'échappement (111) ; et
un conduit d'échappement (220) reliant la sortie d'échappement (111) de la pile à combustible (110) à la turbine (210),
dans lequel la turbine (210) est entraînée par le gaz d'échappement de la pile à combustible (110) conduit à travers le conduit d'échappement (220),
un dispositif d'acheminement d'air (130) est configurée pour acheminer de l'air vers la pile à combustible (110) à travers un conduit d'entrée (135), et
un orifice d'entrée d'air (131) relié de manière fluide au dispositif d'acheminement d'air (130) et configuré pour fournir de l'air au dispositif d'acheminement d'air (130),
**caractérisé en ce que**
le dispositif d'acheminement d'air (130) est connecté électriquement à la pile à combustible (110), dans lequel la pile à combustible (110) est configurée pour fournir de l'énergie électrique au dispositif d'acheminement d'air (130), et
dans lequel l'orifice d'entrée d'air (131) est un orifice d'entrée d'air dynamique ou un orifice d'entrée par aspiration de la couche limite.

2. Système de propulsion de véhicule (1000) selon la revendication 1, comprenant en outre :
un vaporisateur (120) configuré pour vaporiser un combustible liquide pour la pile à combustible (110) ; et
un échangeur de chaleur (138) configuré pour chauffer le combustible liquide dans le vaporisateur (120),
dans lequel le conduit d'entrée (135) est relié de manière fluide à l'échangeur de chaleur (138) pour coupler thermiquement l'air acheminé dans le conduit d'entrée (135) avec le combustible liquide dans le vaporisateur (120).

3. Système de propulsion de véhicule (1000) selon la revendication 2, comprenant en outre :
une branche de conduit d'entrée (137) divergeant du conduit d'entrée (135),
dans lequel la branche de conduit d'entrée (137) est reliée de manière fluide à l'échangeur de chaleur (138) pour coupler thermiquement une partie de l'air acheminé dérivé du conduit d'entrée (135) avec le combustible liquide dans le vaporisateur (120).

4. Système de propulsion de véhicule (1000) selon l'une des revendications 1 à 3, comprenant en outre :
un vaporisateur (120) configuré pour vaporiser un combustible liquide pour la pile à combustible (110) ; et
un échangeur de chaleur (228) configuré pour chauffer le combustible liquide dans le vaporisateur (120),
dans lequel le conduit d'échappement (220) est relié de manière fluide à l'échangeur de chaleur (228) pour coupler thermiquement le gaz d'échappement dans le conduit d'échappement (220) avec le combustible liquide dans le vaporisateur (120).

5. Système de propulsion de véhicule (1000) selon la revendication 4, comprenant en outre :
une branche de conduit d'échappement (227) divergeant du conduit d'échappement (220),
dans lequel la branche de conduit d'échappement (227) est reliée de manière fluide à l'échangeur de chaleur (228) pour coupler thermiquement une partie du gaz d'échappement dérivé du conduit d'échappement (220) avec le combustible liquide dans le vaporisateur (120).

6. Système de propulsion de véhicule (1000) selon la revendication 5, comprenant en outre :
un dispositif d'acheminement d'échappement (225) connecté électriquement à la pile à combustible (110), et configuré pour acheminer au moins une partie du gaz d'échappement de la pile à combustible (110) à travers la branche de conduit d'échappement (227),
dans lequel la pile à combustible (110) est en outre configurée pour fournir de l'énergie électrique au dispositif d'acheminement d'échappement (225).

7. Système de propulsion de véhicule (1000) selon l'une des revendications 1 à 6, comprenant en outre :
un vaporisateur (120) configuré pour vaporiser un combustible liquide pour la pile à combustible (110) ; et
une chambre de combustion (230, 235) reliée de manière fluide au conduit d'échappement (220) en amont de la turbine (210) et reliée de manière fluide au vaporisateur (120),
dans lequel la chambre de combustion (230, 235) est configurée pour amener du combustible vaporisé du vaporisateur (120) dans le gaz d'échappement provenant du conduit d'échappement (220) et pour brûler le combustible vaporisé, et
dans lequel la turbine (210) est entraînée par un gaz de réaction du combustible brûlé et du gaz d'échappement.

8. Système de propulsion de véhicule (1000) selon la revendication 7, dans lequel :
la chambre de combustion (230) est intégrée dans un orifice d'entrée (211) de la turbine (210), ou
la chambre de combustion (235) est intégrée dans la sortie d'échappement (111) de la pile à combustible (110), ou
la chambre de combustion (235) divise le conduit d'échappement (220) entre la pile à combustible (110) et la turbine (210).

9. Système de propulsion de véhicule (1000) selon l'une des revendications 1 à 8, comprenant en outre :
au moins un dispositif de propulsion supplémentaire (201a, 201b) ; et
au moins une turbine supplémentaire (210a, 210b),
dans lequel chaque turbine supplémentaire (210a, 210b) est couplée mécaniquement à l'un de l'au moins un dispositif de propulsion supplémentaire (201a, 201b) et configurée pour entraîner l'au moins un dispositif de propulsion supplémentaire (201a, 201b),
dans lequel le conduit d'échappement (220) relie en outre la sortie d'échappement (111) de la pile à combustible (110) à chaque turbine supplémentaire (210), et
dans lequel chaque turbine supplémentaire (210) est entraînée par le gaz d'échappement de la pile à combustible (110) conduit à travers le conduit d'échappement (220).

10. Aéronef (1) comprenant un système de propulsion de véhicule (1000) selon l'une des revendications 1 à 9.
